# EUROPEAN PATENT SPECIFICATION

(11) **EP 1 344 673 B1**
(45) Date of publication and mention of the grant of the patent: **28.02.2007**
(21) Application number: 03005319.3
(22) Date of filing: 11.03.2003
(51) Int. Cl.: F16H 61/02, F02N 11/08

(54) **Hydraulic system for automatic transmission for vehicle having idle-stop control**
Hydraulisches System für automatisches Getriebe mit Leerlaufstoppregelung
Système hydraulique pour transmission automatique pour véhicule avec commande d'arrêt en position de ralenti

(30) Priority: 11.03.2002 JP 2002065465
(43) Date of publication of application: 17.09.2003
(73) Proprietor: JATCO Ltd, Fuji-shi, Shizuoka 417-8585 (JP)
(72) Inventor: Ohtake, Isamu, Fuji-shi, Shizuoka 417-8585 (JP); Katou, Yoshiaki, Fuji-shi, Shizuoka 417-8585 (JP)
(74) Representative: Grünecker, Kinkeldey, Stockmair & Schwanhäusser Anwaltssozietät

(56) References cited:
- EP-A- 0 742 391
- EP-A- 1 070 870
- US-A- 6 093 974

## Description

### BACKGROUND OF THE INVENTION

The present invention relates to a hydraulic system for an automatic transmission, and more particularly, to a hydraulic system for an automatic transmission for a vehicle having idle-stop control for stopping engine idle at a standstill of the running vehicle.

In recent years, idle-stop vehicles are already operational wherein when the running vehicle comes into a standstill, and predetermined stop conditions are formed, an engine is automatically stopped to achieve fuel savings, a reduction in exhaust emission or noises and the like. With such vehicle, when the engine is stopped, a main pump driven by the engine is stopped, so that oil supplied to a forward clutch or engagement element of an automatic transmission is drawn from a hydraulic passage, lowering the hydraulic pressure. As a result, when the engine is restarted, the forward clutch to be engaged at forward running releases from its engagement state. Thus, if the forward clutch is not engaged quickly at engine restart, an accelerator pedal is depressed in the neutral state as it were, which may produce an engagement shock by engagement of the forward clutch with engine rotation highly increased.

The technique for solving the above inconvenience is proposed in U.S. Patent No. 6,093,974 disclosing the features of the preamble of claims 1 and 11. This technique adopts a system for starting an oil supply for engaging a forward clutch concurrently with engine restart. In order to obtain engagement of the forward clutch as fast as possible, quick pressure increase control for oil is temporarily carried out during a predetermined time when supplying oil. The reference discloses as quick pressure increase control a technique for reducing a time required for oil supply through a hydraulic passage with higher passage resistance and a technique for setting a target control pressure of a solenoid for adjusting the line pressure to a value higher than an ordinary value.

### SUMMARY OF THE INVENTION

However, the above earlier art raises the following problem. The pump discharge capacity, which is lower immediately after engine restart, is secured after engine complete explosion. Then, if the above quick pressure increase control is carried out, the difference in the pump discharge capacity can produce an engagement shock due to sudden engagement. Further, with quick pressure increase control, a pump friction is larger before engine complete explosion at engine restart. And if the forward clutch is engaged before engine complete explosion, the engine complete-explosion timing can be delayed due to forward-clutch friction. This causes delayed achievement of an appropriate pump discharge capacity after engine complete explosion, resulting in delayed start of ordinary engagement control.

It is, therefore, an object of the present invention to provide a hydraulic system for an automatic transmission for a vehicle having idle-stop control, which allows smooth running of the vehicle during execution of idle-stop control.

The present invention provides generally a vehicle provided with an engine (10) having idle-stop control for controlling idle start and idle stop of the engine (10) in accordance with predetermined idle-stop conditions, an automatic transmission (20) for carrying out speed change in accordance with a shift command providing means (50) for controlling speed change of the automatic transmission (20) and using a hydraulic pressure supplied from a hydraulic-pressure source (22), and a hydraulic system comprising means (45) for preferentially supplying the hydraulic pressure to a forward engagement element (UC) of the automatic transmission (20), means (70) for regulating the hydraulic pressure to control engagement of the forward engagement element (L/C),and means (44) for switching between the hydraulic-pressure preferentially supplying means (45) and means (101) for normally supplying the hydraulic pressure, the shift command providing means (50) providing a control command to the hydraulic-pressure regulating means (70) characterized in that the vehicle comprises means for detecting a corresponding value to an output torque of the engine (10), and that the shift command providing means (50) comprises an ordinary-control part for carrying out an ordinary control by providing a control command after completion of engagement of the forward engagement element (L/C) and an engagement-control part for carrying out an engagement control by providing a control command before completion of engagement of the forward engagement element (L/C), wherein at restart of the vehicle after idle stop, the engagement-control part provides the control command in accordance with the detected corresponding value, and wherein when the detected corresponding value is smaller than a predetermined set value, the engagement-control part provides the control command having a value smaller than that during the ordinary control.

An aspect of the present invention is to provide a method of controlling a vehicle provided with an engine (10) having idle-stop control for controlling idle start and idle stop of the engine (10) in accordance with predetermined idle-stop conditions, an automatic transmission (20) for carrying out speed change in accordance with a shift command providing means (50) for controlling speed change of the automatic transmission (20) and using a hydraulic pressure supplied from a hydraulic-pressure source (22), and a hydraulic system comprising means (45) for preferentially supplying the hydraulic pressure to a forward engagement element (UC) of the automatic transmission (20), means (70) for regulating the hydraulic pressure to control engagement of the forward engagement element (L/C), and means (44) for switching between the hydraulic-pressure preferentially supplying means (45) and means (101) for normally supplying the hydraulic pressure, the shift command providing means (50) providing a control command to the hydraulic-pressure regulating means (70), characterized in that the method comprises: detecting a corresponding value to an output torque of the engine (10), carrying out an ordinary control by providing a control command after completion of engagement of the forward engagement element (UC), and carrying out an engagement control by providing a control command before completion of engagement of the forward engagement element (UC), wherein at restart of the vehicle after idle stop, the engagement control is carried out by providing the control command in accordance with the detected corresponding value, and wherein when the detected corresponding value is smaller than a predetermined set value, the engagement control is carried out by providing the control command having a value smaller than that during the ordinary control.

### BRIEF DESCRIPTION OF THE DRAWINGS

The other objects and features of the present invention will become apparent from the following description with reference to the accompanying drawings, wherein:

FIG. 1 is a block diagram showing a control system for a vehicle provided with a hydraulic system for an automatic transmission embodying the present invention;

FIG. 2 is a schematic drawing illustrating a multiple-speed transmission or a speed change mechanism;

FIG. 3 is a table showing engagement of engagement elements in the multiple-speed transmission;

FIG. 4 is a diagram illustrating a hydraulic circuit in a first embodiment;

FIG. 5 is a sectional view showing a first switching valve in FIG. 4;

FIG. 6 is a flowchart illustrating operation of the first embodiment;

FIG. 7 is a chart similar to FIG. 6, illustrating operation of the first embodiment;

FIG. 8 is a map showing a relationship between the engine rpm and the throttle opening;

FIG. 9 is a map similar to FIG. 8, showing a relationship between the throttle opening and the duty ratio during ordinary control and engagement control;

FIG. 10 is a time chart illustrating engine-restart control after idle stop;

FIG. 11 is a view similar to FIG. 4, illustrating the hydraulic circuit at engine restart wherein the hydraulic pressure is supplied through a bypass circuit;

FIG. 12 is a view similar to FIG. 11, illustrating the hydraulic circuit at engine restart wherein the hydraulic pressure is supplied through an ordinary circuit;

FIG. 13 is a graph showing transition of the duty ratio from engagement control to ordinary control;

FIGS. 14A-14B are charts similar to FIG. 10, illustrating constant-inclination ramp control for switching from engagement control to ordinary control;

FIG. 15 is a chart similar to FIG. 7, illustrating a second embodiment of the present invention;

FIGS. 16A-16B are charts similar to FIGS. 14A-14B, illustrating constant-inclination ramp control for switching from engagement control to ordinary control in the second embodiment;

FIG. 17 is an alignment chart illustrating first-speed rotation of the automatic transmission; and

FIG. 18 is a chart similar to FIG. 17, illustrating second-speed rotation of the automatic transmission.

### DETAILED DESCRIPTION OF THE INVENTION

Referring to the drawings, a description is made with regard to a hydraulic system for an automatic transmission for a vehicle having idle-stop control embodying the present invention.

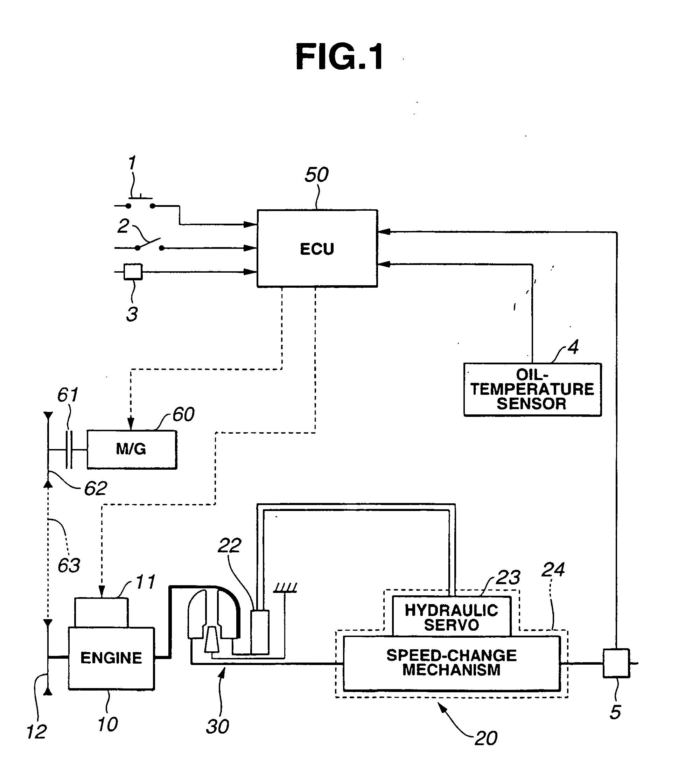

Referring to FIG. 1, a vehicle comprises an engine 10, an automatic transmission 20, a torque converter 30, an electronic control unit (ECU) 50, and a starter generator 60.

The engine 10 is provided with a fuel supply system 11 for supplying fuel to the engine 10, and a chain sprocket 12 connected by a chain 63 to a chain sprocket 62 which is provided to the starter generator 60 through an electromagnetic clutch 61. When serving as a starter of the engine 10, a generator in deceleration, and a generator for generating power in accordance with the battery storage state, the starter generator 60 is put in engagement with the engine 10 by the electromagnetic clutch 61.

The automatic transmission 20 is provided with a main pump 22 rotated with the engine 10 and for supplying the hydraulic pressure to a hydraulic servo 23.

The ECU 50 inputs signals from an idle-stop switch 1, a brake switch 2, a steering-angle sensor 3, an oil-temperature sensor 4, and a vehicle-speed sensor 5 so as to control operation of the starter generator 60 and the fuel supply system 11.

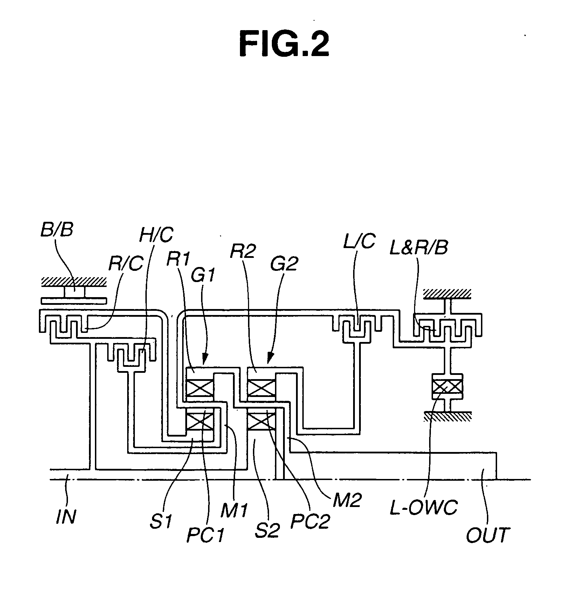

In the first embodiment, a speed change mechanism 24 comprises a gear-type multiple-speed transmission. Referring to FIG. 2, the multiple-speed transmission includes planetary gears G1, G2, coupling members M1, M2, clutches R/C, H/C, UC, brakes B/B, L&R/B, a low one-way clutch L-OWC, an input shaft or member IN, and an output shaft or member OUT.

The first planetary gear G1 is a single pinion type planetary gear comprising a first sun gear S1, a first ring gear R1, and a first carrier PC1 for supporting a pinion meshed with the gears S1, R1. The second planetary gear G2 is a single pinion type planetary gear comprising a second sun gear S2, a second ring gear R2, and a second carrier PC2 for supporting a pinion meshed with the gears S2, R2. The third planetary gear G3 is a single pinion type planetary gear comprising a third sun gear S3, a third ring gear R3, and a third carrier PC3 for supporting a pinion meshed with the gears S3, R3.

The first coupling member M1 is a member for integrally coupling the first carrier PC1 to the second ring gear R2 through a low clutch UC. The second coupling member M2 is a member for integrally coupling the first ring gear R1 to the second carrier PC2.

The reverse clutch R/C is engaged at the reverse (R) range to connect the input shaft IN and the first sun gear S1. The high clutch H/C is engaged at the third and fourth speeds to connect the input shaft IN and the first carrier PC1. The low clutch L/C is engaged at the first, second, and third speeds to connect the first-carrier PC1 and the second ring gear R2.

The low and reverse brake L&R/B is engaged at the first speed and the R range to fix rotation of the first carrier PC1. The band brake B/B is engaged at the second and fourth speeds to fix rotation of the first sun gear S1. The low one-way clutch L-OWC is actuated when the vehicle is in acceleration at the first speed to fix rotation of the first carrier PC1, and it is not actuated during deceleration.

The input shaft IN is coupled to the first ring gear R1 so as to input engine torque through the torque converter 30. The output shaft OUT is coupled to the second carrier PC2 so as to transfer its output torque to driving wheels through a final gear and the like, not shown. Connected to the clutches and the brakes is the hydraulic servo 23 for creating the engagement pressure and the release pressure at each gear ratio.

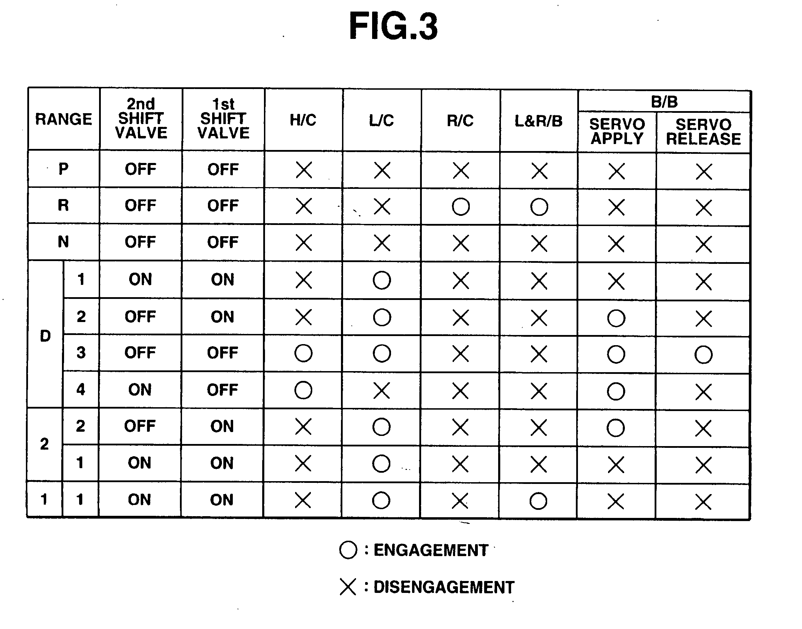

Next, speed change operation is described. FIG. 3 shows a table of engagement operation in the speed change mechanism 24 in the first embodiment. In FIG. 3, a sign ○ denotes the engagement state, and a sign X denotes the disengagement state.

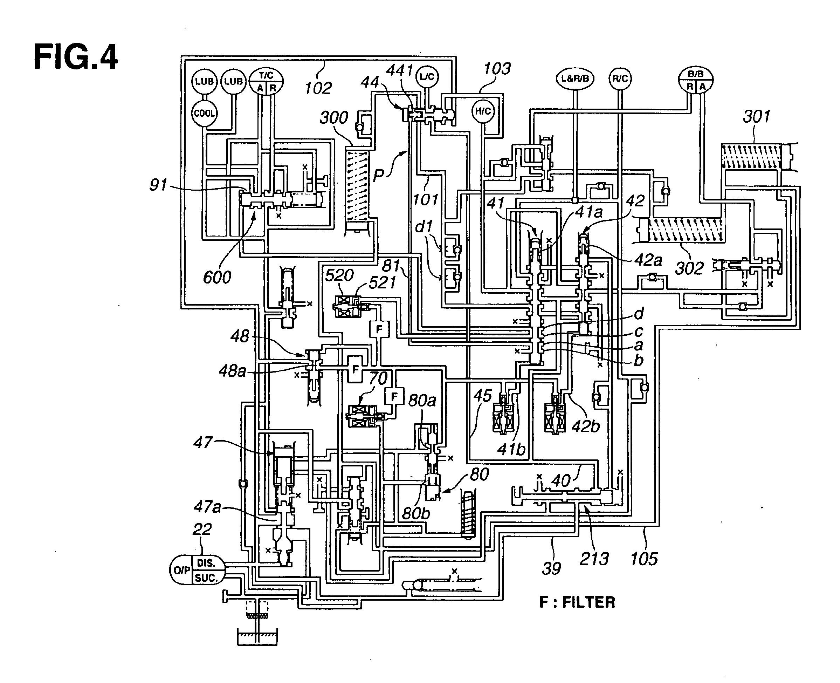

Referring to FIG. 4, there is shown a hydraulic circuit for supplying the control pressure from the hydraulic servo 23 to the speed change mechanism 24 in the first embodiment. The hydraulic circuit comprises main pump 22 driven by the engine 10, a pressure regulating valve 47 for regulating the discharge pressure of the pump 22 for the line pressure, a line-pressure passage 39 for supplying the line pressure to a manual valve 213, and another line-pressure passage or first hydraulic passage 40 for supplying the line pressure downstream of the manual valve 213.

The hydraulic circuit also comprises a first shift valve 41 and second shift valve 42 for switching circuit sections, and pilot-pressure passages 41b, 42b for supplying the pilot pressure for operating the shift valves 41, 42. The line-pressure passage 40 is provided with a bypass passage 45 with less passage resistance, which is arranged immediately upstream of the low clutch L/C. A first switching valve 44 is arranged on the bypass passage 45 to switch between the communicating state and the non-communicating state for the bypass passage 45 and the low clutch L/C.

The hydraulic circuit further comprises a lockup control valve 600 for controlling the apply pressure and the release pressure of a lockup clutch, and a lockup solenoid 520 for controlling operation of the lockup control valve 600.

A passage 81 communicates with a compartment 441 for biasing a spring of the first switching valve 44 and a port "a" of the first shift valve 41. An output port 521 of the lockup solenoid 520 communicates with a port "c" of the first shift valve 41.

At the first and second speeds, the first shift valve 41 has a first shift solenoid 41c turned on, wherein a spool valve is located in the upper position against a load of a spring 41a. Then, the ports "a", "c" of the first shift valve 41 communicate with each other, so that the output pressure of the lockup solenoid 520 is led to the compartment 441 of the first switching valve 44 through the passage 81.

On the other hand, at the third and fourth speeds, the first shift valve 41 has first shift solenoid 41c turned off, wherein the spool valve is located in the lower position by a load of the spring 41a. In this state, the compartment 441 of the first switching valve 44 is drained through the passage 81 and the ports "a", "b" of the first shift valve 41. And the output pressure of the lockup solenoid 520 is led to a port "a1" of the lockup control valve 600 through ports "c", "d" of the first shift valve 41.

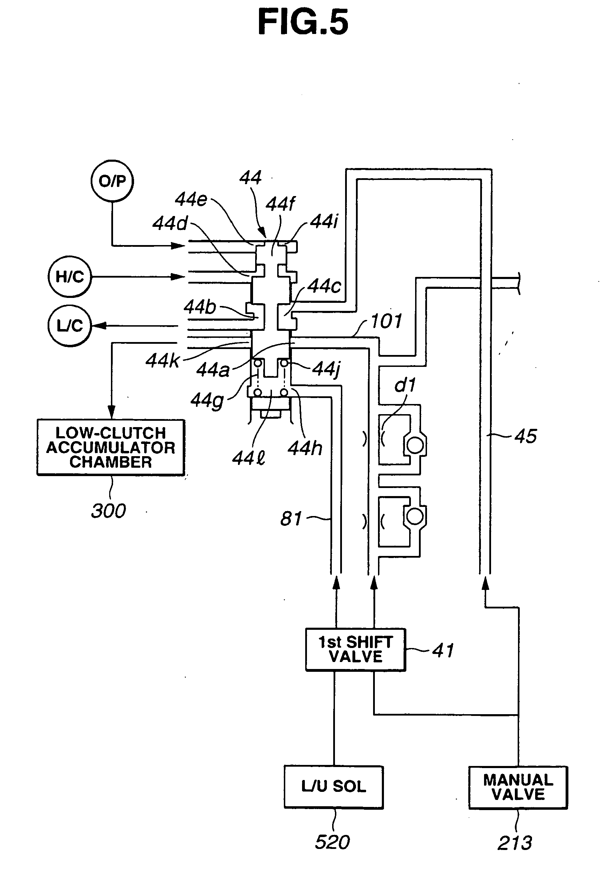

Referring to FIG. 5, the first switching valve 44 comprises a spool valve 44f and a return spring 44g. The spool valve 44f includes a first pressure acting portion 44h having a pressure acting area A1 and a second pressure acting portion 44i having a pressure acting area A2 on which the hydraulic pressure opposite to a reaction force of the return spring 44g acts. A port 44a communicates with a normal low-clutch pressure passage 101 provided with an orifice d1. A port 44b communicates with the low clutch L/C. A port 44c communicates with the bypass passage 45. A port 44d communicates with an interlock preventing passage 103 for supplying the engagement pressure of the high clutch H/C. A port 44e communicates with a switching line-pressure passage 102 upstream of the manual valve 213. A port 44h communicates with the passage 81 for supplying the hydraulic pressure output from the lockup solenoid 520 through the first shift valve 41. And a port 44k communicates with a passage for supplying the hydraulic pressure to a low-clutch accumulator chamber 300.

It is desirable to minimize the passage resistance of the bypass passage 45. Specifically, other hydraulic passages, particularly, at points immediately upstream of the engagement elements, are provided with orifices for preventing the surge pressure immediately after engagement, adjusting the build-up characteristics of the line pressure. Thus, by setting the passage resistance of the bypass passage 45 at a lower value, most of the discharge amount of the pump 22 can be supplied to the low clutch L/C.

When the sum of a set load kx0 of the return spring 44g and a value obtained by multiplying the hydraulic pressure PL/U output from the lockup solenoid 520 to operate in the compartment 441 by the pressure acting area A2 is greater than a value obtained by multiplying the line pressure PL acting on the first pressure acting portion 44i by the pressure acting area A1, i.e. kx0 + PL/U × A2 > PL × A1, the first switching valve 44 has the port 44b' communicating with the port 44c' so that the hydraulic pressure downstream of the manual valve 213 enters the low clutch L/C through the bypass passage 45.

When a value kx0/A1 obtained by dividing the set load kx0 of the return spring 44g by the pressure acting area A1 is expressed by Ps, a set pressure Pset is defined by Pset = Ps + PL/U × A2/A1, where Ps (= kx0/A1) is about 1 kg/cm², and A2/A1 is 1 or more, e.g. 1.5.

If Pset > PL, the first switching valve 44 allows the low dutch L/C to communicate with the bypass passage 45, whereas if Pset < PL, it allows the low clutch L/C to communicate with the normal hydraulic circuit communicating with the orifice d1 and the low-clutch accumulator chamber 300.

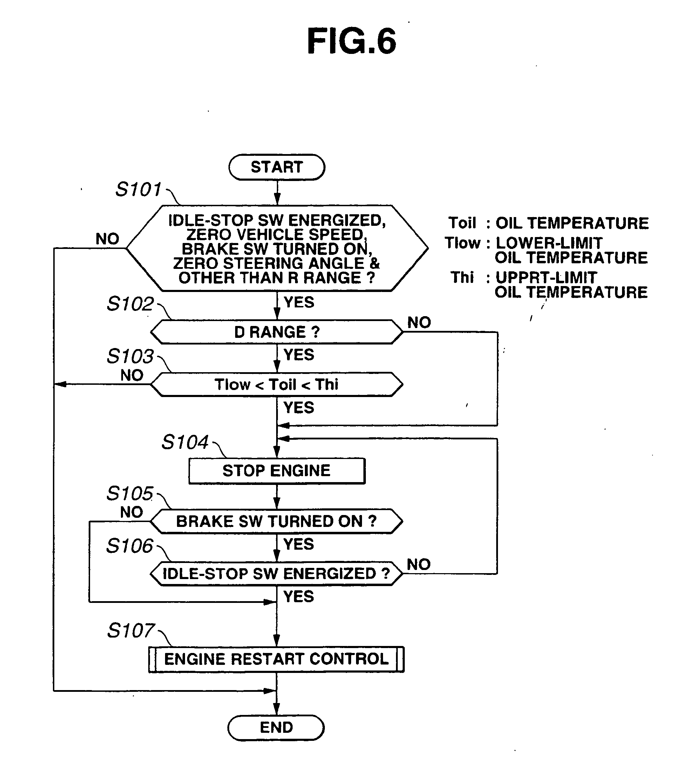

Referring to FIG. 6, the essential contents of idle-stop control in the first embodiment are described.

At a step S101, it is determined whether or not the idle-stop switch 1 is energized, the vehicle speed is zero, the brake switch 2 is turned on, the steering angle is zero, and the range other than the R range is selected. Only if it is determined that all the conditions are met, flow proceeds to a step S102. Otherwise, idle-stop control is cancelled.

At the step S102, it is determined whether or not the select position is the drive (D) range. If it is determined that the select position is the D range, flow proceeds to a step S103. Otherwise, flow proceeds to a step S104.

At the step S103, it is determined whether or not an oil temperature Toil is higher than a lower-limit temperature Tlow and lower than an upper-limit temperature Thi. If it is determined that the conditions are met, flow proceeds to a step S104. Otherwise, flow comes to an end.

At the step S104, processing to stop the engine 10 is carried out.

At a subsequent step S105, it is determined whether or not the brake switch 2 is turned on. If it is determined that the brake switch 2 is turned on, flow proceeds to a step S106. Otherwise, flow proceeds to a step S107.

At the step S106, it is determined whether or not the idle-stop switch 1 is energized. If it is determined that the idle-stop switch 1 is energized, flow proceeds to the step S107. Otherwise, flow returns to the step S104.

At the step S107, engine restart control is carried out.

Specifically, if a driver wants idle-stop control, the vehicle is at a standstill, a brake pedal is depressed, the steering angle is zero, and the R range is not selected, the engine 10 is stopped. The idle-stop switch 1 is a device through which the driver transmits his/her intention to perform or cancel idle stop. At the point when turning an ignition key, the idle-stop switch 1 is in energization. The reason why it is required that the steering angle is zero is to prohibit idle stop at the time of temporary stop of the running vehicle at right-hand turn and the like, for example.

The reason why idle-stop control is prohibited at the R range is that the sufficient oil amount cannot be supplied since the oil amount required for achieving completion of engagement is far greater than that required for engagement at the first speed. Specifically, as shown in the engagement table in FIG. 3, at the first speed, the low clutch L/C needs supply of the hydraulic pressure. Thus, even in the state where the shift valves 41, 42 do not switch the hydraulic passages, the hydraulic pressure needs to be supplied to the low clutch L/C only through the bypass passage 45. However, at the R range, the hydraulic pressure should also be supplied to the reverse clutch R/C and the low and reverse brake L&R/B, which makes difficult supply of the oil amount required for engagement before engine start.

Then, it is determined whether or not the oil temperature Toil is higher than the lower-limit temperature Tlow and lower than the upper-limit temperature Thi. The reason why such processing is carried out is that unless the oil temperature is higher than a predetermined value, the viscosity resistance of oil may not allow a predetermined oil amount to be charged before engine complete explosion, and that when the oil temperature is too higher, a decrease in volumetric efficiency of the pump 22 and an increase in leakage at valve parts due to reduction in viscosity resistance may not allow a predetermined oil amount to be charged before engine complete explosion.

Subsequently, when the brake pedal is released, it is determined that the driver has his/her intention to start the engine 10. Moreover, even with the brake pedal depressed, if it is shown that the idle-stop switch 1 is not energized, it is determined that the driver has his/her intention to start the engine 10. This determination aims to prevent the situation of impossible use of an air conditioner and the like due to a load applied to the battery when the engine 10 is stopped for idle stop, for example. That is, when feeling that the temperature in the cabin is high, the driver can cancel idle-stop control, allowing execution of control in further conformity with his/her intention. With this, the starter generator 60 is actuated to supply the hydraulic pressure to the line-pressure passage 40.

At engine stop, the pump 22 is stopped, and thus the first switching valve 44 is switched by the return spring 44g to the state where the bypass passage 45 and the low clutch L/C are in communication. Specifically, at engine stop, oil supplied to the low clutch L/C is discharged from the hydraulic passage, leading to lowered hydraulic pressure. As a result, when the engine 10 is restarted, the low clutch L/C to be engaged at first-speed running is in disengagement, and thus requires supply of the hydraulic pressure at engine restart.

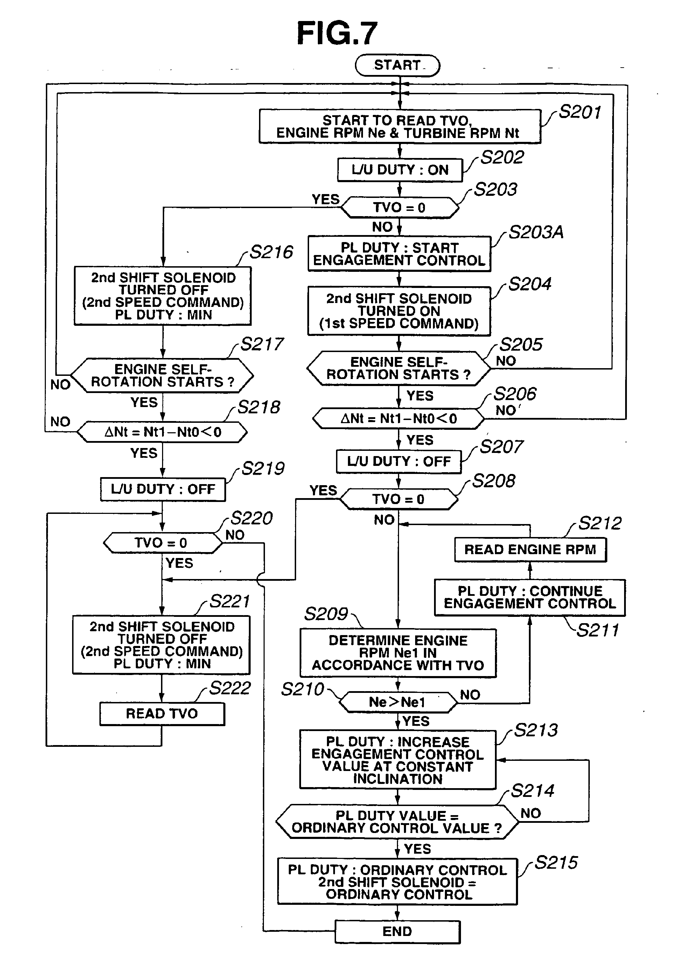

Referring next to FIG. 7, engine restart control is described.

At a step S201, a throttle opening TVO, an engine rpm Ne, and a turbine rpm Nt are read.

At a step S202, the lockup solenoid 520 is turned on.

At a step S203, it is determined whether or not the throttle opening TVO is zero. If it is determined that TVO = 0, flow proceeds to a step S216, whereas if it is determined that TVO ≠ 0, flow proceeds to a step S203A.

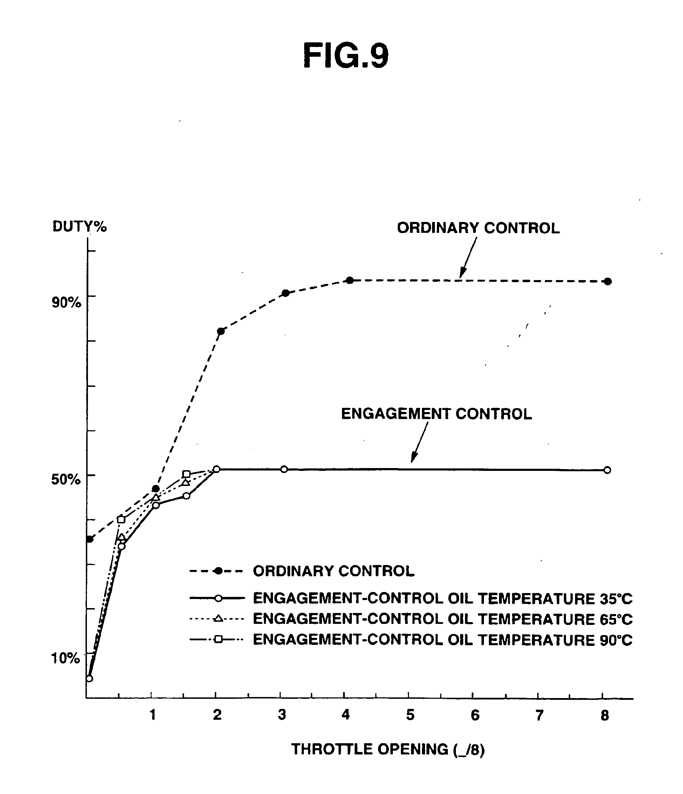

At the step S203A, engagement control for a line-pressure duty solenoid 70 is started. FIG. 9 is a map showing a relationship between the throttle opening TVO and the duty ratio during ordinary control and engagement control for the line-pressure duty solenoid 70, wherein engagement control is shown by oil temperature. The duty ratio of the line-pressure duty solenoid 70 is determined and output in accordance with the map.

At a step S204, an ON command or first-speed command is provided to the second shift solenoid 42.

At a step S205, it is determined whether or not the engine 10 starts self-rotation. Processing from the step S201 to the step S205 is repeatedly carried out until it is determined that the engine 10 starts self-rotation. If it is determined that the engine 10 starts self-rotation, flow proceeds to a step S206.

At the step S206, it is determined whether or not a drop in the turbine rpm Nt occurs by a predetermined amount ΔNt. Processing from the step S201 to the step S206 is repeatedly carried out until it is determined that a drop in the turbine rpm Nt occurs. If it is determined that a drop in the turbine rpm Nt occurs, flow proceeds to a step S207 where the lockup solenoid 520 is turned off.

At a step S208, it is determined again whether or not the throttle opening TVO is zero. If it is determined that TVO = 0, flow proceeds to a step S221, where as if it is determined that that TVO ≠ 0, flow proceeds to a step S209.

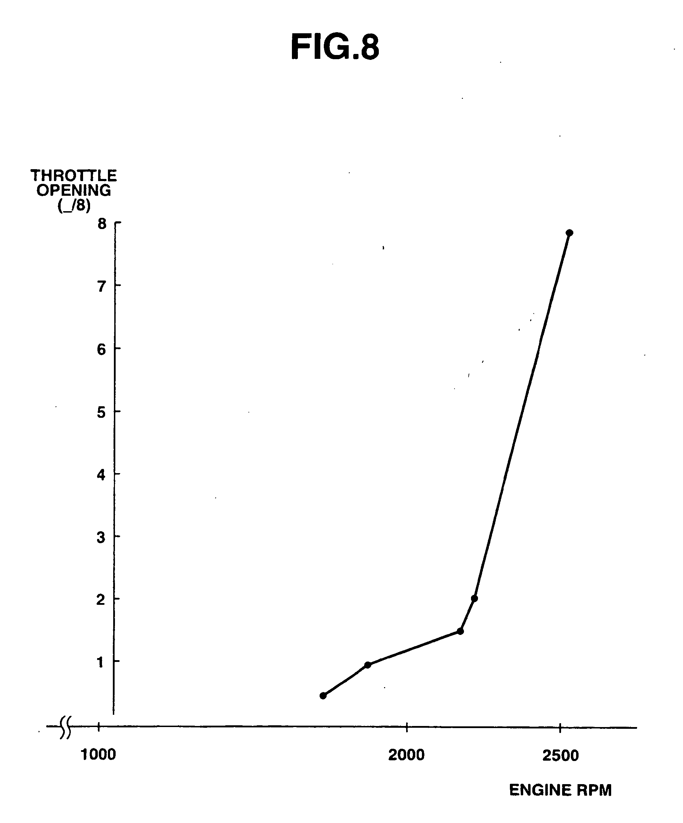

At the step S209, using a map shown in FIG. 8, an engine rpm Ne1, which forms the termination condition of engagement control for the line-pressure duty solenoid 70, is determined in accordance with the throttle opening TVO.

At a step S210, it is determined whether or not the current engine rpm Ne is greater than the engine rpm Ne1 determined at the step S209. If it is determined that Ne ≤ Ne1, flow proceeds to a step S211, whereas it is determined that Ne > Ne1, flow proceeds to a step S213.

At the step S211, engagement control for the line-pressure duty solenoid 70 is carried out continuously.

At a step S212, the engine rpm Ne is read, then flow proceeds to the step S209.

At the step S213, an engagement-control value of the line-pressure duty solenoid 70 is increased at a constant inclination, i.e. constant-inclination ramp control is carried out. Ramp control will be described later.

At a step S214, it is determined whether or not the engagement-control value of the line-pressure duty solenoid 70 reaches an ordinary-control value. Until it is determined that the engagement-control value of the line-pressure duty solenoid 70 reaches ordinary-control value, constant-inclination ramp control is carried out at the step S213.

At a step S215, the line-pressure duty solenoid 70 is put in ordinary control, and the second solenoid valve 42 is also in put in ordinary control.

At the step S216 subsequent to the step S203, an OFF command or second-speed command is provided to the second shift solenoid 42 so as to output a minimum value as the engagement-control value of the line-pressure duty solenoid 70.

At a step S217, it is determined whether or not the engine 10 starts self-rotation. If it is determined that the engine 10 starts self-rotation, flow proceeds to a step S218, whereas if it is determined that the engine 10 does not start self-rotation, processing from the step S201 to the step S217 is repeatedly carried out.

At the step S218, it is determined whether or not a drop in the turbine rpm Nt occurs by a predetermined amount ΔNt. Processing from the step S201 to the step S218 is repeatedly carried out until it is determined that a drop in the turbine rpm Nt occurs. If it is determined that a drop in the turbine rpm Nt occurs, flow proceeds to a step S219 where the lockup solenoid 520 is turned off.

At a step S220, it is determined again whether or not the throttle opening TVO is zero. If it is determined that TVO = 0, flow proceeds to a step S221, whereas if it is determined that TVO ≠ 0, flow comes to an end.

At the step S221, an OFF command or second-speed command is provided to the second shift solenoid 42 so at to output a minimum value as the engagement-control value of the line-pressure duty solenoid 70.

At a step S222, the throttle opening TVO is read again, then flow proceeds to the step S220 to continuously provide a second-speed command up to detection of the throttle opening TVO.

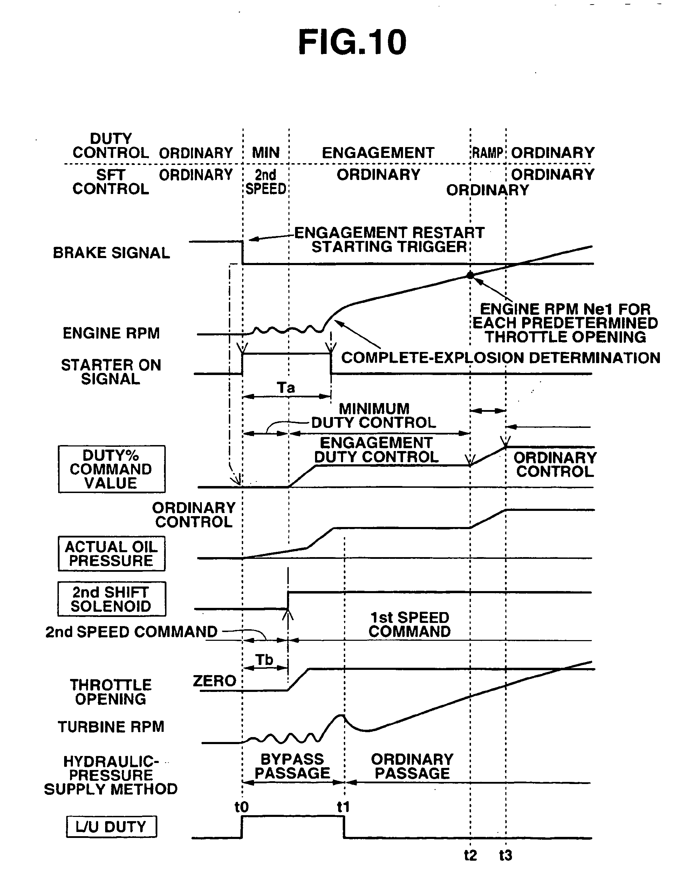

Referring to FIG. 10 , the above engine restart control is described. First, a description is made about processing of the step S201 → step S202 → step S203 → step S216 → step S217. With the brake switch 2 turned off, engine restart control is started. The starter of the engine 10 is turned on to provide a second-speed command to the second shift solenoid 42 while the throttle opening TVO is zero. (In this connection, note that at the instant when the brake pedal is released, the accelerator pedal is not depressed, and thus the throttle opening TVO is zero). Specifically, the second shift solenoid 42 is tuned off, and the first shift solenoid 41c is turned on (refer to the engagement table in FIG. 3).

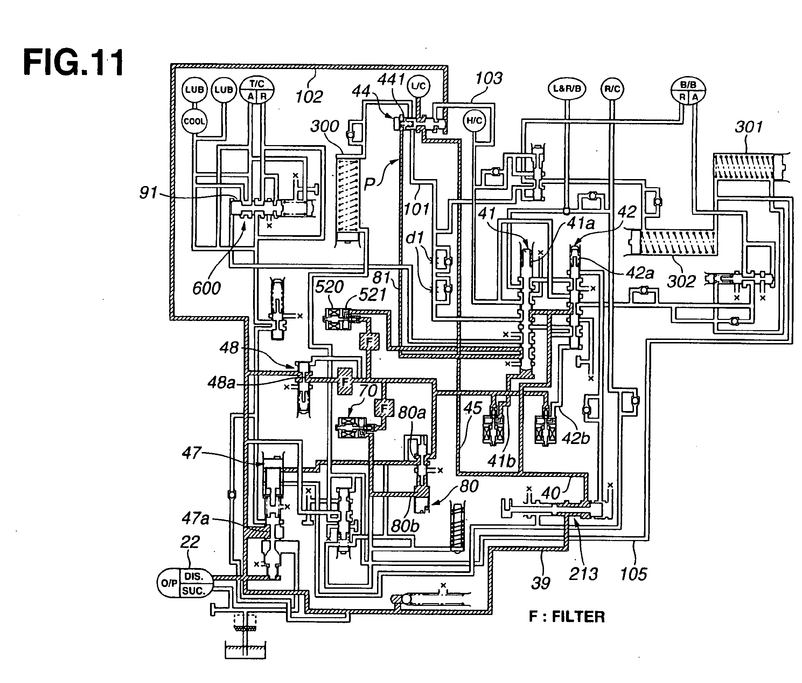

At the same time, the lockup solenoid 520 is turned on. Then, oil flows through the hatched section in the hydraulic circuit shown in FIG. 11. In such a way, a second-speed command is provided when the accelerator pedal is not depressed, thus preventing output rotation out of the automatic transmission 20 from being carried out in the reverse direction by the action of the low one-way clutch L-OWC while achieving engagement of the low clutch L/C and the band brake B/B as shown in FIGS. 2 and 3.

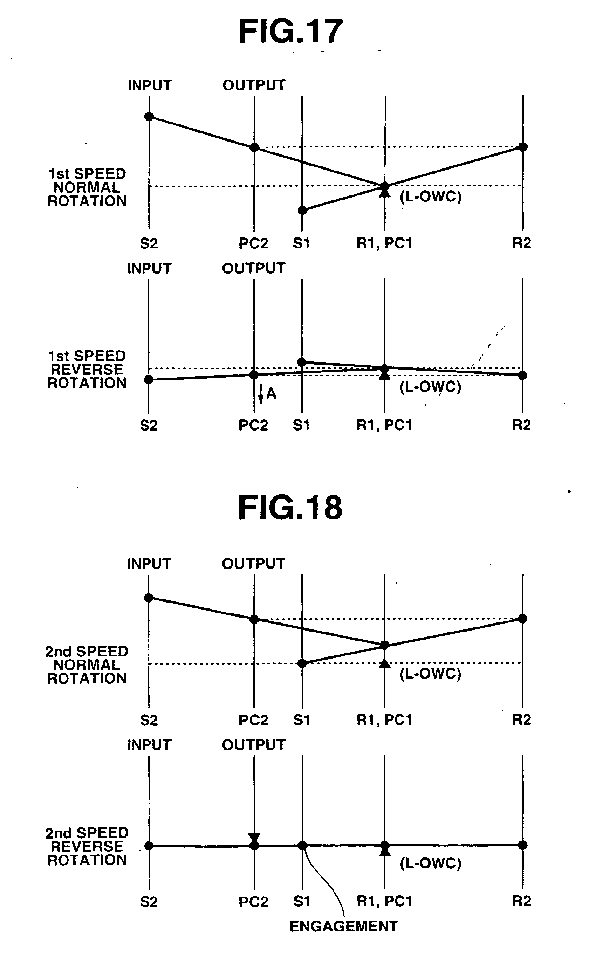

Referring to FIGS. 17 and 18, there are shown alignment charts illustrating first-speed normal and reverse rotations of the automatic transmission, and second-speed normal and reverse rotations thereof in the first embodiment, respectively. Referring to FIG. 17, at the first speed, if rotation in the reverse direction is input from the driving wheels, which occurs when the vehicle runs uphill, for example, the vehicle runs in the reverse direction as shown by arrow A. Referring to FIG. 18, at the second speed, even if rotation in the reverse direction is input from the driving wheels, the driving wheels can be fixed by the action of the low one-way clutch L-OWC and the band brake B/B for fixing the sun gear S1.

Therefore, even when carrying out idle stop on uphill and then engine restart by releasing idle stop, for example, the brake is effective immediately after the hydraulic pressure is secured which allows engagement of the low one-way clutch L-OWC and the band brake B/B for fixing the sun gear S1, preventing reverse run of the vehicle from that time onward.

First, the first shift solenoid 41 c is turned on to move the first shift valve 41 upward as seen in FIG. 4, so that the hydraulic pressure PL/U output from the lockup solenoid 520 is led to the compartment 441 of the first switching valve 44 through the passage 81. Also led to the first switching valve 44 through the passage 102 is the line pressure which forms hydraulic pressure against the sum of the hydraulic pressure PUU output from the lockup solenoid 520 and a biasing force of the spring 44g. Moreover, from the bypass passage 45 branched from the line-pressure passage 40, the hydraulic pressure is directly supplied to the low clutch L/C through the first switching valve 44. At the same time, a pressure modifier valve 80 is controlled through control of the line-pressure duty solenoid 70, and the pressure regulating valve 47 is regulated to control the line pressure. Here, referring to FIG. 9, since the throttle opening TVO is zero, the duty ratio of the line-pressure duty solenoid 70 is controlled to a minimum value of about 5-10%.

Next, a description is made about processing of the step S203 → step S203A → step S204 → step S205 → step S206 → step S207 → step S208 → step S209 → step S210 → step S213 → step S214 → step S215.

Following rotation of the engine 10 by cranking the starter generator 60, the driver depresses the accelerator pedal. At that time, an ON command or first-speed command is provided to the second shift solenoid 42. And, using the map shown in FIG. 9, the duty ratio of the line-pressure duty solenoid 70 is controlled in accordance with the throttle opening TVO.

At the step S205, it is determined whether or not the engine 10 starts self-rotation in accordance with the engine rpm. When the engine rpm Ne exceeds a predetermined value, the starter generator 60 is turned off. At that time, the turbine rpm Nt has characteristics to increase up to a point after engine complete explosion, and drop once by a load due to increased engagement force of the low clutch L/C and an inertia force due to vehicle standstill, then increase smoothly. Using the characteristics, it is determined whether or not a drop in the turbine rpm Nt occurs by a predetermined amount ΔNt. After confirming a drop in the turbine rpm Nt, the lockup solenoid 520 is turned off.

The state of the first switching valve 44 at that time is described. The first pressure acting portion 44i of the first switching valve 44 receives the line pressure and a biasing force of the spring 44g and the hydraulic pressure PL/U output from the lockup solenoid 520 as pressure against the line pressure. Moreover, the hydraulic pressure is directly supplied to the low clutch L/C through the bypass passage 45. In the engine cranking state before engine complete explosion, the hydraulic pressure can vary considerably. Particularly, a sharp increase in the line pressure acting on the first pressure acting portion 44i can cause the spool 44f to move, leading to switching of the first switching valve 44. Thus, the hydraulic pressure is held supplied from the lockup solenoid 520 to the first switching valve 44, so that even if the hydraulic pressure varies, the first switching valve 44 ensures communication between the bypass passage 45 and the low clutch L/C.

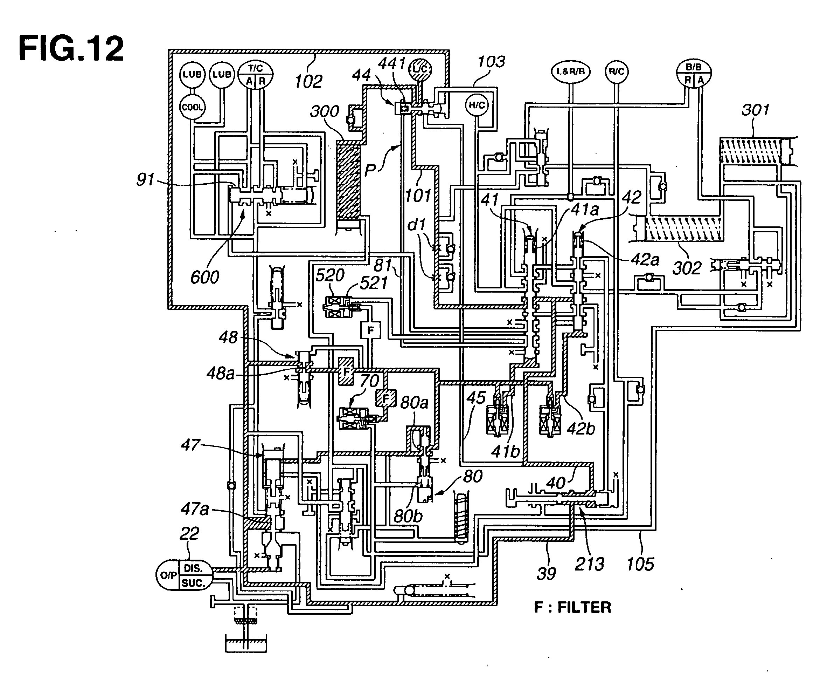

On the other hand, after engine complete explosion, stable line pressure can be secured up to a point, so that the lockup solenoid 520 is turned off. With this, as shown in the hatched section in the hydraulic circuit shown in FIG. 12, the first switching valve 44 switches from the bypass passage 45 to the normal passage 101 in accordance with a rise of the line pressure, allowing prevention of an engagement shock and the like.

When, after turning off the lockup solenoid 520, the engine rpm Ne reaches the engine rpm Ne1 determined at the step S209, the pump discharge capacity is secured to obtain an engagement force of the low clutch L/C which appears to be required. Thus, when the engine rpm Ne reaches the engine rpm Ne1, control of the line-pressure duty solenoid 70 is switched from engagement control to ordinary control. At this switching, ramp control is carried out at the step S213.

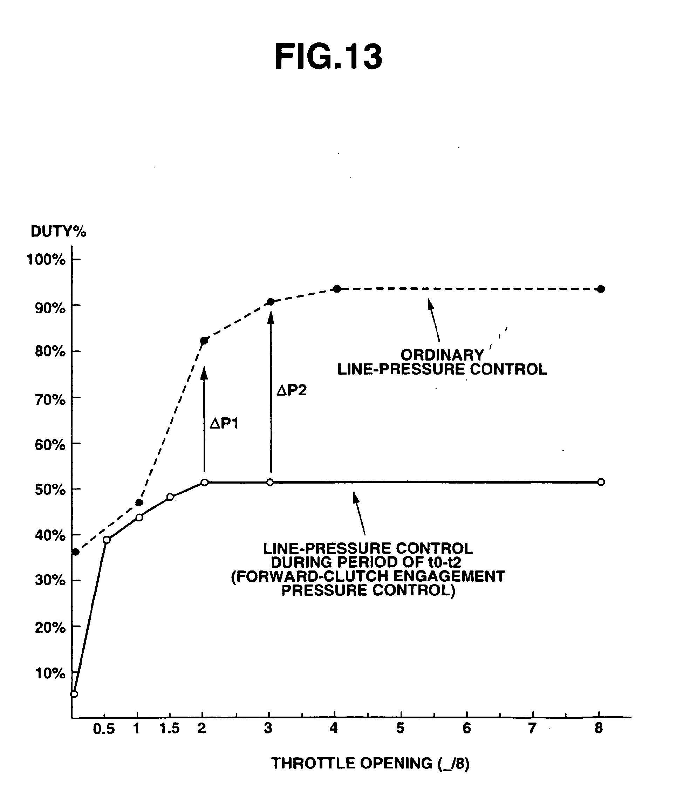

Referring to FIG. 13, ramp control is described.

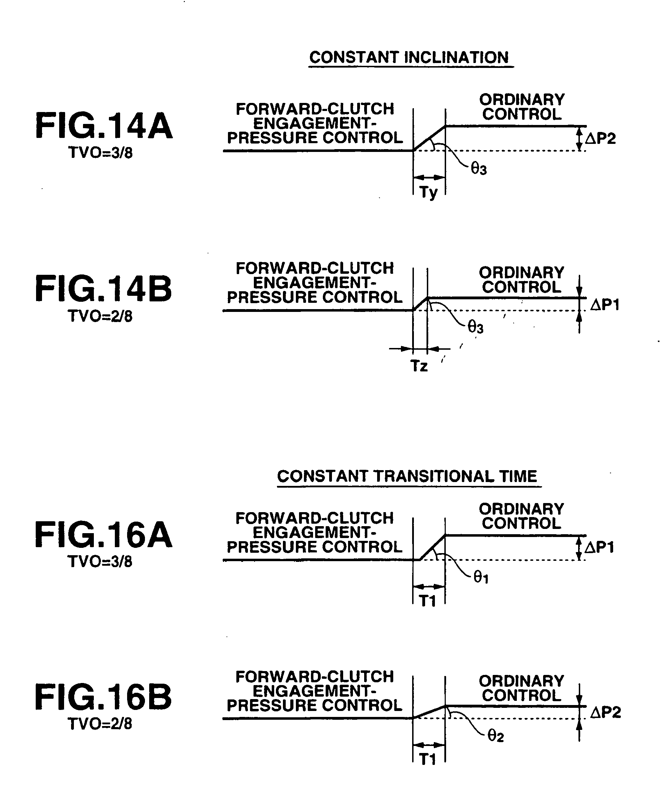

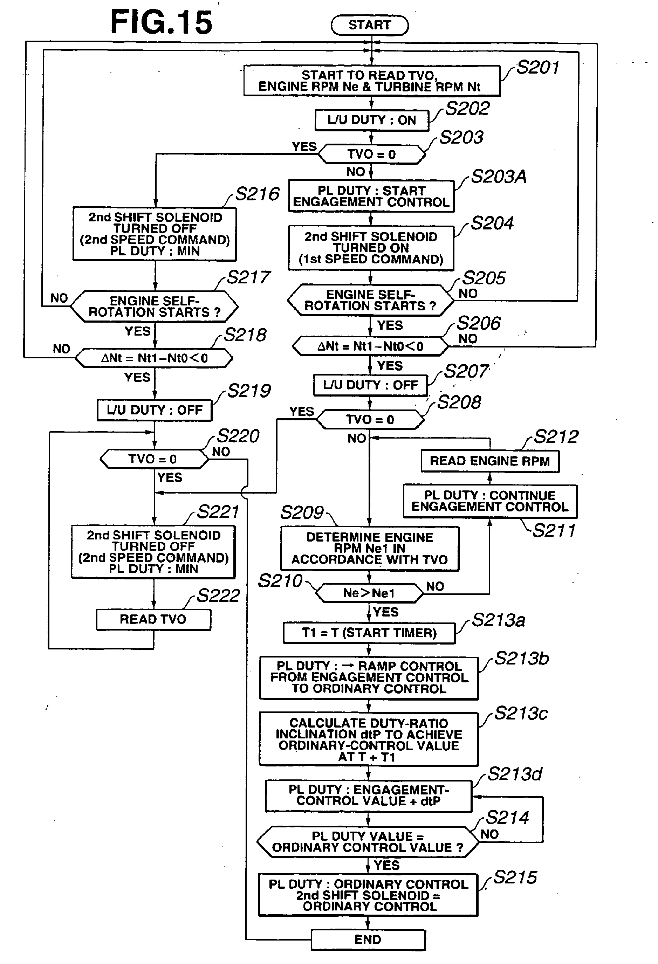

When the throttle opening TVO is 2/8, there is a difference ΔP1 in duty ratio between engagement control and ordinary control as shown in FIG. 13. Referring to FIGS. 14A-14B, constant-inclination ramp control is adopted in the first embodiment. Referring to FIG. 14B, when the throttle opening TVO is 2/8, the inclination is θ3, so that a time Tz required for transition from engagement control to ordinary control can be expressed by Tz = (ΔP1/θ3).

When the throttle opening TVO is 3/8, there is a difference ΔP2 (ΔP1 < ΔP2) in duty ratio between engagement control and ordinary control as shown in FIG. 13. Referring to FIG. 14A, when the throttle opening TVO is 3/8, the inclination is θ3, so that a time Ty required for transition from engagement control to ordinary control can be expressed by Ty = (ΔP2/θ3).

By putting the inclination constant in such a way, the transitional time can be varied in accordance with the throttle opening TVO, leading to smooth transition of control in accordance with a difference ΔP in duty ratio. Moreover, the first switching valve 44 can be switched in the underlapped state, so that when switching from the bypass passage 45 to the normal passage 101, the engagement pressure is supplied to the first switching valve 44 without interruption. With this, the engagement pressure of the low clutch L/C can be prevented from decreasing at the time of switching, resulting in achievement of smooth running of the vehicle without affecting speed change control of the automatic transmission 20 during ordinary running.

Referring to FIG. 15, there is shown second embodiment of the present invention which is substantially the same as the first embodiment except processing at steps S213a-S213d.

At the step S213a, timer count is started up to a predetermined set time T1.

At the step S213b, ramp control is started for ramp-like transition of the duty ratio of the line-pressure duty solenoid 70 from engagement control to ordinary control.

At the step S213c, an inclination dtP of the duty ratio is calculated to achieve a value for ordinary control after a lapse of the set time T1 from start of ramp control.

At the step S213d, a value obtained by adding a value for engagement control to a value obtained by (dtP x timer count) is output as duty ratio to the line-pressure duty solenoid 70.

Specifically, in the first embodiment, ramp control for switching from engagement control to ordinary control is carried out by shifting the duty ratio from an engagement-control value to an ordinary-control value with the inclination kept constant. On the other hand, in the second embodiment, ramp control is carried out with the transitional time kept constant.

Referring to FIGS. 16B, when the throttle opening TVO is 2/8, there is a difference ΔP2 in duty ratio between engagement control and ordinary control. Referring to FIGS. 16A-16B, constant-inclination ramp control is adopted in the second embodiment. When the throttle opening TVO is 2/8, a time required for transition from engagement control to ordinary control is T1, so that an inclination θ2 can be expressed by θ2 = (ΔP2/T1).

Referring to FIG. 16A, when the throttle opening TVO is 3/8, there is a difference ΔP1 (ΔP1 > ΔP2) in duty ratio between engagement control and ordinary control. When the throttle opening TVO is 3/8, a time required for transition from engagement control to ordinary control is T1, so that an inclination θ1 can be expressed by θ1 = (ΔP1/T1).

By putting the transitional time constant in such a way, the inclination can be varied in accordance with the throttle opening TVO, leading to smooth transition of control within a set time even if the difference ΔP in duty ratio is greater.

As described above, in the illustrative embodiments, the hydraulic pressure is preferentially supplied to the low clutch L/C through the bypass passage 45 at engine restart after idle stop. Thus, even if the throttle opening TVO is a maximum value and when sufficient pump discharge pressure is not obtained, the line-pressure duty ratio is output which is lower than a command value during ordinary control, allowing execution of engagement control for the low clutch L/C. Moreover, the line pressure is controlled to a lower value, obtaining smaller engagement force. This reduces an engine load before engine complete explosion, resulting in quick completion of engine complete explosion.

Further, engine over-rotation can occur only for an instant immediately after engine complete explosion. However, engagement control is carried out even after engine complete explosion, allowing sure execution of engagement control while preventing an engagement shock. In the case where sufficient discharge pressure of the main pump 22 is not secured before or after engine complete explosion, even if higher line-pressure duty ratio is output, it is difficult to obtain the line pressure in response to the command value, resulting in possible degradation of the controllability. Moreover, immediately after engine complete explosion, the engine 10 can fall in over-rotation, leading to temporary occurrence of a sharp increase in the pump discharge capacity.

However, in the illustrative embodiments, even if sufficient discharge pressure of the main pump 22 is not secured, the line-pressure duty ratio is set at a lower value, allowing achievement of the line pressure in response to the command value. Moreover, even if the pump discharge capacity is increased temporarily, the line-pressure duty ratio cannot be affected by a temporary variation in the pump discharge capacity due to lower value, resulting in improved controllability.

Further, a map is provided having engine rpm Ne corresponding to the switching timing preset in accordance with the throttle opening TVO (refer to FIG. 8). In accordance with the map, the timing is output to switch from engagement control to ordinary control. By way of example, below 2/8 throttle opening TVO, the engine rpm Ne is set to gently increase in accordance with the throttle opening TVO. And above 8/3 throttle opening TVO, the engine rpm Ne increases sharply to cause a sharp increase in engine output torque, so that even if the throttle opening TVO becomes larger, control is switched at lower engine rpm Ne. This allows output of the switching timing in accordance with the engine-torque characteristics, resulting in achievement of stable control.

Still further, ramp control is performed for ramp-like switching from the line-pressure duty ratio during engagement control to that during ordinary control in a ramp way. The line-pressure duty ratio during engagement control is set to be lower than that during ordinary control, so that there is a difference therebetween at switching of control. However, ramp-like transition is carried out without sharply increasing the line-pressure duty ratio, allowing prevention of an engagement shock.

Furthermore, at engine restart, when the throttle opening TVO is roughly zero or preset value, a second-speed command is provided which is a shift command for actuating the low one-way clutch L-OWC and the band brake B/B in the automatic transmission 20, allowing prevention of output rotation out of the automatic transmission 20 from being carried out in the reverse direction by the action of the low one-way clutch L-OWC while achieving engagement of the low clutch L/C and the band brake B/B. Therefore, even when carrying out idle stop on uphill and then engine restart by releasing idle stop, for example, the brake is effective by the action of the low one-way clutch L-OWC and the band brake B/B, preventing reverse run of the vehicle.

Further, a first-speed command is provided when detecting the throttle opening TVO. At the second speed, the hydraulic pressure is supplied to the apply side of the band brake B/B. Then, when a first-speed command is provided at the second speed, 2-1 shift can be achieved by only discharging the hydraulic pressure. Thus, even if a quick-start requirement is provided, for example, due to detection of the throttle opening TVO when outputting a second-speed command, high controllability can be obtained. Moreover, even if an engine-torque variation or the like occurs due to passage of the second speed, torque output to the driving wheels is limited to a lower value, allowing prevention of an engagement shock and the like.

Still further, when it is determined that the turbine rpm Nt is reduced by a set rpm or more after determining that engine complete explosion is achieved, the first switching valve 44 switches from the bypass passage 45 to the normal passage 101. Specifically, at engine restart, the engine 10 is cranked by the starter generator 60. At that time, the turbine rpm Nt varies. But when it is determined that engine complete explosion is achieved, engine output torque is stabilized up to a point, which is input to the automatic transmission 20 to rotate the turbine. The low clutch L/C receives the hydraulic pressure through the bypass passage 45, producing a certain engagement force. The low clutch L/C has one side connected to the turbine and another side connected to the driving wheels. Since the vehicle starts from a standstill, a fixing force resulting from inertial force acts on the driving wheels. Through the low clutch L/C, the inertia force causes the turbine rpm Nt to drop once.

Specifically, when the turbine rpm Nt increases and then drops once, the low clutch L/C secures a certain engagement force, i.e. so-called pre-charge is completed. Switching from the bypass passage 45 to the normal passage 101 at that timing allows smooth execution of switching. When the turbine rpm Nt starts to drop once, engagement control is already in execution, providing no strange feel to the driver.

Furthermore, switching control of the first switching valve 44 is carried out using the hydraulic pressure PL/U output from the lockup solenoid 520. Specifically, as is not locked up at vehicle start, the lockup solenoid 520 is not used at the first or second speed typically. The use of the lockup solenoid 520 for actuating the first switching valve 44 contributes not only to an improvement in the availability of the lockup solenoid 520, but also to fine electronic switching control.

Having described the present invention with regard to the illustrative embodiments, the present invention is not limited thereto, and various changes and modifications can be made without departing from the scope of the present invention. By way of example, the present invention is applicable to not only to the low clutch, but also to any of other forward engagement elements of the automatic transmission. Moreover, in the illustrative embodiments, the invention is applied to the forward engagement element of the gear-type multiple-speed automatic transmission. Alternatively, the invention can be applied to the forward engagement element of a continuously variable transmission (CVT).

## Claims

1. A vehicle provided with an engine (10) having idle-stop control for controlling idle start and idle stop of the engine (10) in accordance with predetermined idle-stop conditions, an automatic transmission (20) for carrying out speed change in accordance with a shift command providing means (50) for controlling speed change of the automatic transmission (20) and using a hydraulic pressure supplied from a hydraulic-pressure source (22), and a hydraulic system comprising means (45) for preferentially supplying the hydraulic pressure to a forward engagement element (L/C) of the automatic transmission (20), means (70) for regulating the hydraulic pressure to control engagement of the forward engagement element (UC), and means (44) for switching between the hydraulic-pressure preferentially supplying means (45) and means (101) for normally supplying the hydraulic pressure, the shift command providing means (50) providing a control command to the hydraulic-pressure regulating means (70), **characterized in that**
the vehicle comprises means for detecting a corresponding value to an output torque of the engine (10), and
that the shift command providing means (50) comprises an ordinary-control part for carrying out an ordinary control by providing a control command after completion of engagement of the forward engagement element (L/C) and an engagement-control part for carrying out an engagement control by providing a control command before completion of engagement of the forward engagement element (L/C),
wherein at restart of the vehicle after idle stop, the engagement-control part provides the control command in accordance with the detected corresponding value, and
wherein when the detected corresponding value is smaller than a predetermined set value, the engagement-control part provides the control command having a value smaller than that during the ordinary control.

2. The vehicle as specified in claim 1, **characterized in that** the vehicle comprises means for detecting a throttle opening, wherein when the detected throttle opening is not equal to roughly zero, the engagement-control part provides the smaller value of the control command.

3. The vehicle as specified in claim 1 or 2, **characterized in that** the corresponding value detecting means comprise means for detecting an engine rpm, wherein the detected corresponding value includes the engine rpm.

4. The vehicle as specified in any of claims 1 to 3, **characterized in that** the smaller value of the control command provided by the engagement-control part is 30-60% of the value of the control command provided by the ordinary-control part.

5. The vehicle as specified in any of claims 1 to 4, **characterized in that** there is provided to the shift command providing means (50) a control switching part for switching from the engagement control carried out by the engagement-control part to the ordinary control carried out by the ordinary-control part when the detected corresponding value is greater than the predetermined set value.

6. The vehicle as specified in claim 5, **characterized in that** there is provided to the shift command providing means (50) a timing setting part for setting as the predetermined set value a predetermined engine rpm in accordance with the throttle opening and providing a switching timing to the control switching part in accordance with the predetermined engine rpm.

7. The vehicle as specified in claim 5 or 6, **characterized in that** the control switching part switches from the control command provided by the engagement-control part to that provided by the ordinary-control part in a ramp way.

8. The vehicle as specified in any of claims 2 to 7, **characterized in that** the shift command providing means (50) provides the shift command to actuate a one-way clutch (L-OWC) of the automatic transmission (20) when the detected throttle opening is equal to roughly zero, and the shift command for a minimum speed when the detected throttle opening is not equal to roughly zero.

9. The vehicle as specified in any of claims 1 to 8, **characterized in that** the vehicle comprises means for detecting a turbine rpm as an input rpm of the automatic transmission (20); means for determining if the turbine rpm is reduced over a predetermined turbine rpm, and means for determining if complete explosion of the engine (10) is carried out,
wherein when it is determined that the turbine rpm is reduced over the predetermined turbine rpm after determining that complete explosion of the engine (10) is carried out, the switching means (44) carry out switching.

10. The vehicle as specified in any of claims 1 to 9, **characterized in that** the automatic transmission (20) comprises a lockup clutch for directly couple the engine (10) to the automatic transmission (20), and the hydraulic system comprises a lockup solenoid (520) for controlling engagement of the lockup clutch and a lockup control valve (600),
wherein the switching means (44) carry out switching using a hydraulic pressure output from the lockup solenoid (520).

11. A method of controlling a vehicle provided with an engine (10) having idle-stop control for controlling idle start and idle stop of the engine (10) in accordance with predetermined idle-stop conditions, an automatic transmission (20) for carrying out speed change in accordance with a shift command providing means (50) for controlling speed change of the automatic transmission (20) and using a hydraulic pressure supplied from a hydraulic-pressure source (22), and a hydraulic system comprising means (45) for preferentially supplying the hydraulic pressure to a forward engagement element (L/C) of the automatic transmission (20), means (70) for regulating the hydraulic pressure to control engagement of the forward engagement element (L/C), and means (44) for switching between the hydraulic-pressure preferentially supplying means (45) and means (101) for normally supplying the hydraulic pressure, the shift command providing means (50) providing a control command to the hydraulic-pressure regulating means (70), **characterized in that** the method comprises:
detecting a corresponding value to an output torque of the engine (10),
carrying out an ordinary control by providing a control command after completion of engagement of the forward engagement element (L/C), and
carrying out an engagement control by providing a control command before completion of engagement of the forward engagement element (UC),
wherein at restart of the vehicle after idle stop, the engagement control is carried out by providing the control command in accordance with the detected corresponding value, and
wherein when the detected corresponding value is smaller than a predetermined set value, the engagement control is carried out by providing the control command having a value smaller than that during the ordinary control.

12. The method as specified in claim 11, **characterized in that** the method comprises detecting a throttle opening, wherein when the detected throttle opening is not equal to roughly zero, the engagement control is carried out by providing the smaller value of the control command.

13. The method as specified in claim 11 or 12, **characterized in that** the corresponding value detecting step includes detecting an engine rpm, wherein the detected corresponding value includes the engine rpm.

14. The method as specified in any of claims 11 to 13, **characterized in that** the smaller value of the control command of the engagement control is 30-60% of the value of the control command of the ordinary control.

15. The method as specified in any of claims 11 to 14, **characterized in that** the method comprises switching from the engagement control to the ordinary control when the detected corresponding value is greater than the predetermined set value.

16. The method as specified in claim 15, **characterized in that** the method comprises setting as the predetermined set value a predetermined engine rpm in accordance with the throttle opening, and providing a switching timing to the switching step in accordance with the predetermined engine rpm.

17. The method as specified in claim 15 or 16, **characterized in that** the switching step switches from the control command of the engagement control to that of the ordinary control in a ramp way.

18. The method as specified in any of claims 12 to 17, **characterized in that** the method comprises providing the shift command to actuate a one-way clutch (L-OWC) of the automatic transmission (20) when the detected throttle opening is equal to roughly zero, and the shift command for a minimum speed when the detected throttle opening is not equal to roughly zero.

19. The method as specified in any of claims 11 to 18, **characterized in that** the method comprises detecting a turbine rpm as an input rpm of the automatic transmission (20), determining if the turbine rpm is reduced over a predetermined turbine rpm, and determining if complete explosion of the engine (10) is carried out,
wherein when it is determined that the turbine rpm is reduced over the predetermined turbine rpm after determining that complete explosion of the engine (10) is carried out, the switching means (44) carry out switching.

20. The method as specified in any of claims 11 to 19, **characterized in that** the automatic transmission (20) comprises a lockup clutch for directly couple the engine (10) to the automatic transmission (20), and the hydraulic system comprises a lockup solenoid (520) for controlling engagement of the lockup clutch and a lockup control valve (600),
wherein the switching means (44) carry out switching using a hydraulic pressure output from the lockup solenoid (520).

## Patentansprüche

1. Fahrzeug, das mit einem Motor (10), der Leerlaufabschalt-Steuerung zum Steuern von Leerlaufstart und Leerlaufabschaltung des Motors (10) entsprechend vorgegebenen Leerlaufabschalt-Bedingungen aufweist, einem automatischen Getriebe (20) zum Ausführen von Geschwindigkeitsänderung entsprechend einer Schaltbefehl-Bereitstelleinrichtung (50) zum Steuern von Geschwindigkeitsänderung des automatischen Getriebes (20), die einen von einer Hydraulikdruckquelle (22) zugeführten Hydraulikdruck verwendet, und einem Hydrauliksystem versehen ist, das eine Einrichtung (45) zum bevorzugten Zuführen des Hydraulikdrucks zu einem Vorwärts-Eingriffselement (UC) des automatischen Getriebes (20), eine Einrichtung (70) zum Regulieren des Hydraulikdrucks, um Eingriff des Vorwärts-Eingriffselementes (L/C) zu steuern, sowie eine Einrichtung (44) zum Umschalten zwischen der Einrichtung (45) zum bevorzugten Zuführen von Hydraulikdruck und einer Einrichtung (101) zum normalen Zuführen des Hydraulikdrucks umfasst, wobei die Schaltbefehl-Erzeugungseinrichtung (50) der Hydraulikdruck-Reguliereinrichtung (70) einen Steuerbefehl bereitstellt, **dadurch gekennzeichnet, dass**
das Fahrzeug eine Einrichtung zum Erfassen eines einem Ausgangsdrehmoment des Motors (10) entsprechenden Wertes umfasst, und
die Schaltbefehl-Bereitstelleinrichtung (50) einen Normal-Steuerteil zum Ausführen einer Normal-Steuerung durch Bereitstellen eines Steuerbefehls nach Abschluss vom Eingriff des Vorwärts-Eingriffselementes (L/C) und einen Eingriffs-Steuerteil zum Ausführen einer Eingriffs-Steuerung durch Bereitstellen eines Steuerbefehls vor Abschluss von Eingriff des Vorwärts-Eingriffselementes (UC) umfasst,
wobei beim Neustarten des Fahrzeugs nach Leerlaufabschaltung der Eingriffs-Steuerteil den Steuerbefehl gemäß dem erfassten entsprechenden Wert bereitstellt, und
wobei, wenn der erfasste entsprechende Wert kleiner ist als ein vorgegebener Sollwert, der Eingriffs-Steuerteil den Steuerbefehl mit einem Wert bereitstellt, der kleiner ist als der während der Normal-Steuerung.

2. Fahrzeug nach Anspruch 1, **dadurch gekennzeichnet, dass** das Fahrzeug eine Einrichtung zum Erfassen einer Drosselöffnung umfasst, wobei, wenn die erfasste Drosselöffnung nicht gleich ungefähr Null ist, der Eingriffs-Steuerteil den kleineren Wert des Steuerbefehls bereitstellt.

3. Fahrzeug nach Anspruch 1 oder 2, **dadurch gekennzeichnet, dass** die Einrichtung zum Erfassen des entsprechenden Wertes eine Einrichtung zum Erfassen einer Motor-Drehzahl umfasst, wobei der erfasste entsprechende Wert die Motor-Drehzahl einschließt.

4. Fahrzeug nach einem der Ansprüche 1 bis 3, **dadurch gekennzeichnet, dass** der kleinere Wert des Steuerbefehls, der durch den Eingriffs-Steuerteil erzeugt wird, 30-60% des Wertes des Steuerbefehls beträgt, der durch den Normal-Steuerteil erzeugt wird.

5. Fahrzeug nach einem der Ansprüche 1 bis 4, **dadurch gekennzeichnet, dass** die Schaltbefehl-Bereitstelleinrichtung (50) mit einem Steuerungs-Umschaltteil versehen ist, der von der Eingriffs-Steuerung, die durch den Eingriffs-Steuerteil ausgeführt wird, zu der Normal-Steuerung umschaltet, die durch den Normal-Steuerteil ausgeführt wird, wenn der erfasste entsprechende Wert größer ist als der vorgegebene Sollwert.

6. Fahrzeug nach Anspruch 5, **dadurch gekennzeichnet, dass** die Schaltbefehl-Bereitstelleinrichtung (50) mit einem Zeiteinstellteil versehen ist, der als den vorgegebenen Sollwert eine vorgegebene Motor-Drehzahl entsprechend der Drosselöffnung einstellt und eine Umschalt-Zeit für den Steuerungs-Umschaltteil entsprechend der vorgegebenen Motor-Drehzahl bereitstellt.

7. Fahrzeug nach Anspruch 5 oder 6, **dadurch gekennzeichnet, dass** der Steuerungs-Umschaltteil von dem durch den Eingriffs-Steuerteil bereitgestellten Steuerbefehl rampenartig zu dem durch den Normal-Steuerteil bereitgestellten umschaltet.

8. Fahrzeug nach einem der Ansprüche 2 bis 7, **dadurch gekennzeichnet, dass** die Schaltbefehl-Bereitstelleinrichtung (50) den Startbefehl bereitstellt, um eine Einwegkupplung (L-OWC) des automatischen Getriebes (20) zu betätigen, wenn die erfasste Drosselöffnung gleich ungefähr Null ist, und den Schaltbefehl für eine minimale Geschwindigkeit, wenn die erfasste Drosselöffnung nicht gleich ungefähr Null ist.

9. Fahrzeug nach einem der Ansprüche 1 bis 8, **dadurch gekennzeichnet, dass** das Fahrzeug eine Einrichtung zum Erfassen einer Turbinen-Drehzahl als einer Eingangs-Drehzahl des automatischen Getriebes (20), eine Einrichtung, die feststellt, ob die Turbinen-Drehzahl über eine vorgegebene Turbinen-Drehzahl hinaus verringert ist, und eine Einrichtung umfasst, die feststellt, ob vollständige Explosion des Motors (10) ausgeführt ist,
wobei, wenn festgestellt wird, dass die Turbinen-Drehzahl über die vorgegebene Turbinen-Drehzahl hinaus verringert ist, nachdem festgestellt wurde, dass vollständige Explosion des Motors (10) ausgeführt ist, die Umschalteinrichtung (44) Umschalten ausführt.

10. Fahrzeug nach einem der Ansprüche 1 bis 9, **dadurch gekennzeichnet, dass** das automatische Getriebe (20) eine Überbrückungskupplung zum direkten Kuppeln des Motors (10) mit dem automatischen Getriebe (20) umfasst, und das hydraulische System ein Überbrückungs-Magnetventil (520) zum Steuern von Eingriff der Überbrückungskupplung sowie ein Überbrückungs-Steuerventil (600) umfasst,
wobei die Umschalteinrichtung (44) Umschalten unter Verwendung eines von dem Überbrückungs-Magnetventil (520) ausgegebenen Hydraulikdrucks ausführt.

11. Verfahren zum Steuern eines Fahrzeugs, das mit einem Motor (10), der Leerlaufabschalt-Steuerung zum Steuern von Leerlaufstart und Leerlaufabschaltung des Motors (10) entsprechend vorgegebener Leerlaufabschalt-Bedingungen aufweist, einem automatischen Getriebe (20) zum Ausführen von Geschwindigkeitsänderung entsprechend einer Schaltbefehl-Bereitstelleinrichtung (50) zum Steuern von Geschwindigkeitsänderung des automatischen Getriebes (20), die einen von einer Hydraulikdruckquelle (22) zugeführten Hydraulikdruck verwendet, und einem Hydrauliksystem versehen ist, das eine Einrichtung (45) zum bevorzugten Zuführen des Hydraulikdrucks zu einem Vorwärts-Eingriffselement (L/C) des automatischen Getriebes (20), eine Einrichtung (70) zum Regulieren des Hydraulikdrucks, um Eingriff des Vorwärts-Eingriffselementes (L/C) zu steuern, sowie eine Einrichtung (44) zum Umschalten zwischen der Einrichtung (45) zum bevorzugten Zuführen von Hydraulikdruck und einer Einrichtung (101) zum normalen Zuführen des Hydraulikdrucks umfasst, wobei die Schaltbefehl-Bereitstelleinrichtung (50) einen Steuerbefehl für die Hydraulikdruck-Reguliereinrichtung (70) bereitstellt, **dadurch gekennzeichnet, dass** das Verfahren umfasst:
Erfassen eines einem Ausgangsdrehmoment des Motors (10) entsprechenden Wertes,
Ausführen einer Normal-Steuerung durch Bereitstellen eines Steuerbefehls nach Abschluss von Eingriff des Vorwärts-Eingriffelementes (L/C), und
Ausführen einer Eingriffs-Steuerung durch Bereitstellen eines Steuerbefehls vor Abschluss von Eingriff des Vorwärts-Eingriffselementes (L/C),
wobei beim Neustarten des Fahrzeugs nach Leerlaufabschaltung die Eingriffs-Steuerung ausgeführt wird, indem der Steuerbefehl gemäß dem erfassten entsprechenden Wert bereitgestellt wird, und
wobei, wenn der erfasste entsprechende Wert kleiner ist als ein vorgegebener Sollwert, die Eingriffs-Steuerung ausgeführt wird, indem der Steuerbefehl mit einem Wert bereitgestellt wird, der kleiner ist als der während der Normal-Steuerung.

12. Verfahren nach Anspruch 11, **dadurch gekennzeichnet, dass** das Verfahren Erfassen einer Drosselöffnung umfasst, wobei, wenn die erfasste Drosselöffnung nicht gleich ungefähr Null ist, die Eingriffs-Steuerung ausgeführt wird, indem der kleinere Wert des Steuerbefehls bereitgestellt wird.

13. Verfahren nach Anspruch 11 oder 12, **dadurch gekennzeichnet, dass** der Schritt zum Erfassen des entsprechenden Wertes Erfassen einer Motor-Drehzahl einschließt, wobei der erfasste entsprechende Wert die Motor-Drehzahl einschließt.

14. Verfahren nach einem der Ansprüche 11 bis 13, **dadurch gekennzeichnet, dass** der kleinere Wert des Steuerbefehls der Eingriffs-Steuerung 30-60% des Wertes des Steuerbefehls der Normal-Steuerung beträgt.

15. Verfahren nach einem der Ansprüche 11 bis 14, **dadurch gekennzeichnet, dass** das Verfahren Umschalten von der Eingriffs-Steuerung auf die Normal-Steuerung umfasst, wenn der erfasste entsprechende Wert größer ist als der vorgegebene Sollwert.

16. Verfahren nach Anspruch 15, **dadurch gekennzeichnet, dass** das Verfahren Einstellen einer vorgegebenen Motor-Drehzahl entsprechend der Drosselöffnung als den vorgegebenen Sollwert und Erzeugen einer Umschaltzeit für den Umschaltschritt entsprechend der vorgegebenen Motor-Drehzahl umfasst.

17. Verfahren nach Anspruch 15 oder 16, **dadurch gekennzeichnet, dass** der Umschaltschritt von dem Steuerbefehl der Eingriffs-Steuerung rampenartig zu dem der Normal-Steuerung umschaltet.

18. Verfahren nach den Ansprüchen 12 bis 17, **dadurch gekennzeichnet, dass** das Verfahren Erzeugen des Schaltbefehls zum Betätigen einer Einwegkupplung (L-OCW) des automatischen Getriebes (20), wenn die erfasste Drosselöffnung gleich ungefähr Null ist, und des Schaltbefehls für eine minimale Geschwindigkeit umfasst, wenn die erfasste Drosselöffnung nicht gleich ungefähr Null ist.

19. Verfahren nach einem der Ansprüche 11 bis 18, **dadurch gekennzeichnet, dass** das Verfahren Erfassen einer Turbinen-Drehzahl als eine Eingangs-Drehzahl des automatischen Getriebes (20), Feststellen, ob die Turbinen-Drehzahl über eine vorgegebene Turbinen-Drehzahl hinaus verringert ist, und Feststellen, ob vollständige Explosion des Motors (10) ausgeführt ist, umfasst,
wobei, wenn festgestellt wird, dass die Turbinen-Drehzahl über die vorgegebene Turbinen-Drehzahl hinaus verringert ist, nachdem festgestellt wurde, dass vollständige Explosion des Motors (10) ausgeführt ist, die Umschalteinrichtung (44) Umschalten ausführt.

20. Verfahren nach einem der Ansprüche 11 bis 19, **dadurch gekennzeichnet, dass** das automatische Getriebe (20) eine Überbrückungskupplung zum direkten Kuppeln des Motors (10) mit dem automatischen Getriebe (20) umfasst, und das Hydrauliksystem ein Überbrückungs-Magnetventil (520) zum Steuern von Eingriff der Überbrückungskupplung sowie ein Überbrückungs-Steuerventil (600) umfasst,
wobei die Umschalteinrichtung (44) Umschalten unter Verwendung eines von dem Überbrückungs-Magnetventil (520) ausgegebenen Hydraulikdrucks ausführt.

## Revendications

1. Véhicule équipé d'un moteur (10) comportant une commande d'arrêt en position de ralenti pour commander le départ de ralenti et l'arrêt de ralenti du moteur (10) en l'accord avec des conditions d'arrêt de ralenti prédéterminées, une transmission automatique (20) pour exécuter des changements de vitesse en accord avec un moyen de réalisation de commande de changement (50) pour commander le changement de vitesse de la transmission automatique (20) et en utilisant une pression hydraulique fournie d'une source de pression hydraulique (22), et un système hydraulique comprenant un moyen (45) pour fournir de préférence la pression hydraulique à un élément d'engagement avant (L/C) de la transmission automatique (20), un moyen (70) pour régler la pression hydraulique afin de commander l'engagement de l'élément d'engagement avant (L/C), et un moyen (44) pour commuter entre le moyen (45) fournissant de préférence la pression hydraulique et le moyen (101) pour fournir normalement la pression hydraulique, le moyen de réalisation de commande de changement (50) fournissant une instruction de commande au moyen de réglage de pression hydraulique (70), **caractérisé en ce que**
le véhicule comprend un moyen pour détecter une valeur correspondante à un couple de sortie du moteur (10), et
**en ce que** le moyen (50) fournissant une instruction de changement comprend une partie de commande ordinaire pour exécuter une commande ordinaire en émettant une instruction de commande après l'achèvement de l'engagement de l'élément d'engagement avant (L/C) et une partie de commande d'engagement pour exécuter une commande d'engagement en émettant une instruction de commande avant l'achèvement de l'engagement de l'élément d'engagement avant (L/C),
où lors du redémarrage du véhicule après un arrêt de ralenti, la partie de commande d'engagement fournit l'instruction de commande en accord avec la valeur correspondante détectée, et
où lorsque la valeur correspondante détectée est plus petite qu'une valeur prédéterminée réglée, la partie de commande d'engagement émet l'instruction de commande d'une valeur plus petite que celle pendant la commande ordinaire.

2. Véhicule selon la revendication 1, **caractérisé en ce que** le véhicule comprend un moyen pour détecter une ouverture de papillon, où lorsque l'ouverture de papillon détectée n'est pas égale à approximativement zéro, la partie de commande d'engagement réalise la plus petite valeur de l'instruction de commande.

3. Véhicule selon la revendication 1 ou 2, **caractérisé en ce que** le moyen de détection de la valeur correspondante comprend un moyen pour détecter un tr/mn du moteur, où la valeur détectée correspondante comprend le tr/mn du moteur.

4. Véhicule selon l'une des revendications 1 à 3, **caractérisé en ce que** la plus petite valeur de l'instruction de commande réalisée par la partie de commande d'engagement représente 30-60% de la valeur de l'instruction de commande fournie par la partie de commande ordinaire.

5. Véhicule selon l'une des revendications 1 à 4, **caractérisé en ce que** le moyen de réalisation de commande de changement (50) est pourvu d'une partie de commutation de commande pour commuter de la commande d'engagement exécutée par la partie de commande d'engagement à la commande ordinaire exécutée par la partie de commande ordinaire lorsque la valeur correspondante détectée est plus grande que la valeur prédéterminée réglée.

6. Véhicule selon la revendication 5, **caractérisé en ce que** le moyen de réalisation de commande de changement (50) est muni d'une partie d'établissement d'instant pour établir la valeur réglée prédéterminée à un tr/mn prédéterminé du moteur en accord avec l'ouverture de papillon et en transmettant un instant de commutation à la partie de commutation de commande en accord avec le tr/mn prédéterminé du moteur.

7. Véhicule selon la revendication 5 ou 6, **caractérisé en ce que** la partie de commutation de commande commute de l'instruction de commande fournie par la partie de commande d'engagement à celle fournie par la partie de commande ordinaire à la manière d'une rampe.

8. Véhicule selon l'une des revendications 2 à 7, **caractérisé en ce que** le moyen de réalisation d'instruction de changement (50) fournit l'instruction de changement pour actionner un embrayage à une voie (L-OWC) de la transmission automatique (20) lorsque l'ouverture détectée du papillon est approximativement égale à zéro, et l'instruction de changement pour une vitesse minimale lorsque l'ouverture détectée du papillon n'est pas égale à approximativement zéro.

9. Véhicule selon l'une des revendications 1 à 8, **caractérisé en ce que** le véhicule comprend un moyen pour détecter un tr/mn de la turbine comme tr/mn d'entrée de la transmission automatique (20) ; un moyen pour déterminer si le tr/mn de la turbine est réduit par rapport à un tr/mn de turbine prédéterminé, et un moyen pour déterminer si l'explosion complète du moteur (10) est exécutée,
ou lorsqu'il est déterminé que le tr/mn de la turbine est réduit par rapport au tr/mn prédéterminé de la turbine après avoir déterminé que l'explosion complète du moteur (10) a été exécutée, le moyen de commutation (44) exécute la commutation.

10. Véhicule selon l'une des revendications 1 à 9, **caractérisé en ce que** la transmission automatique (20) comprend un embrayage de verrouillage pour coupler directement le moteur (10) à la transmission automatique (20), et le système hydraulique comprend un solénoïde de verrouillage (520) pour commander la mise en prise de l'embrayage de verrouillage et d'une soupape de commande de verrouillage (600),
où le moyen de commutation (44) exécute la commutation en utilisant une sortie de pression hydraulique du solénoïde de verrouillage (520).

11. Procédé de commande d'un véhicule équipé d'un moteur (10) comportant une commande d'arrêt en position de ralenti pour commander le début du ralenti et l'arrêt du ralenti du moteur (10) en accord avec des conditions d'arrêt de ralenti prédéterminées, une transmission automatique (20) pour exécuter un changement de vitesse en accord avec un moyen de réalisation d'instructions de changement (50) pour commander le changement de vitesse de la transmission automatique (20) et en utilisant la pression hydraulique fournie d'une source de pression hydraulique (22), et un système hydraulique comprenant un moyen (45) pour fournir de préférence la pression hydraulique à un élément d'engagement avant (L/C) de la transmission automatique (20), un moyen (70) pour régler la pression hydraulique pour commander la mise en prise de l'élément d'engagement avant (L/C), et un moyen (44) pour commuter entre le moyen fournissant de préférence la pression hydraulique (45) et le moyen (101) pour fournir normalement la pression hydraulique, le moyen de réalisation d'instructions de changement (50) fournissant une instruction de commande au moyen de réglage de pression hydraulique (70), **caractérisé en ce que** le procédé comprend les étapes consistant à :
détecter une valeur correspondante à un couplé de sortie du moteur (10),
exécuter une commande ordinaire en fournissant une instruction de commande après l'achèvement de l'engagement de l'élément d'engagement avant (L/C), et
exécuter une commande d'engagement en fournissant une instruction de commande avant l'achèvement de l'engagement de l'élément d'engagement avant (L/C),
où lors du redémarrage du véhicule après un arrêt de ralenti, la commande d'engagement est exécutée en fournissant l'instruction de commande en accord avec la valeur correspondante détectée, et
où lorsque la valeur correspondante détectée est plus petite qu'une valeur réglée prédéterminée, la commande d'engagement est exécutée en fournissant l'instruction de commande ayant la valeur plus petite que celle pendant la commande ordinaire.

12. Procédé selon la revendication 11, **caractérisé en ce que** le procédé comprend la détection d'une ouverture du papillon, où lorsque l'ouverture détectée du papillon n'est pas égale à approximativement zéro, la commande d'engagement est exécutée en fournissant la plus petite valeur de l'instruction de commande.

13. Procédé selon la revendication 11 ou 12, **caractérisé en ce que** l'étape de détection de la valeur correspondante comprend la détection d'un tr/mn du moteur, où la valeur correspondante détectée comprend le tr/mn du moteur.

14. Procédé selon l'une des revendications 11 à 13, **caractérisé en ce que** la plus petite valeur de l'instruction de commande de la commande d'engagement représente 30-60% de la valeur de l'instruction de commande de la commande ordinaire.

15. Procédé selon l'une des revendications 11 à 14, **caractérisé en ce que** le procédé comprend la commutation de la commande d'engagement à la commande ordinaire lorsque la valeur correspondante détectée est plus grande que la valeur réglée prédéterminée.

16. Procédé selon la revendication 15, **caractérisé en ce que** le procédé comprend l'établissement, comme valeur réglée prédéterminée, d'un tr/mn prédéterminé du moteur en accord avec l'ouverture de papillon, et la transmission d'un instant de commutation à l'étape de commutation en accord avec le tr/mn prédéterminé du moteur.

17. Procédé selon la revendication 15 ou 16, **caractérisé en ce que** l'étape de commutation commute de l'instruction de commande de la commande d'engagement à celle de la commande ordinaire à la manière d'une rampe.

18. Procédé selon l'une des revendications 12 à 17, **caractérisé en ce que** le procédé comprend la réalisation d'une instruction de changement pour actionner un embrayage à une voie (L-OWC) de la transmission automatique (20) lorsque l'ouverture détectée du papillon est égale à approximativement zéro, et l'instruction de changement pour une vitesse minimale lorsque l'ouverture détectée du papillon n'est pas égale à approximativement zéro.

19. Procédé selon l'une des revendications 11 à 18, **caractérisé en ce que** le procédé comprend la détection d'un tr/mn de turbine comme tr/mn d'entrée de la transmission automatique (20), la détermination si le tr/mn de la turbine est réduit par rapport à un tr/mn de turbine prédéterminé, et la détermination si l'explosion complète du moteur (10) est exécutée,
où lorsqu'il est déterminé que le tr/mn de la turbine est réduit par rapport au tr/mn prédéterminé de la turbine après avoir déterminé que l'explosion complète du moteur (10) a été exécutée, le moyen de commutation (44) exécute la commutation.

20. Procédé selon l'une des revendications 11 à 19, **caractérisé en ce que** la transmission automatique (20) comprend un embrayage de verrouillage pour coupler directement le moteur (10) à la transmission automatique (20), et le système hydraulique comprend un solénoïde de verrouillage (520) pour commander l'engagement de l'embrayage de verrouillage et d'une soupape de commande de verrouillage (600),
où le moyen de commutation (44) exécute la commutation en utilisant une sortie de pression hydraulique du solénoïde de verrouillage (520).
